**Europäisches Patentamt**

**European Patent Office**

**Office européen des brevets**

(19)

(11) Veröffentlichungsnummer : **0 389 500 B1**

(12) # EUROPÄISCHE PATENTSCHRIFT

(45) Veröffentlichungstag der Patentschrift :
**27.12.91 Patentblatt 91/52**

(51) Int. Cl.$^5$ : **B62D 11/14**

(21) Anmeldenummer : **88909095.7**

(22) Anmeldetag : **05.10.88**

(86) Internationale Anmeldenummer :
**PCT/EP88/00888**

(87) Internationale Veröffentlichungsnummer :
**WO 89/03335 20.04.89 Gazette 89/09**

(54) **ÜBERLAGERUNGSLENKGETRIEBE FÜR GLEISKETTENFAHRZEUGE.**

(30) Priorität : **09.10.87 DE 3734125**

(43) Veröffentlichungstag der Anmeldung :
**03.10.90 Patentblatt 90/40**

(45) Bekanntmachung des Hinweises auf die
Patenterteilung :
**27.12.91 Patentblatt 91/52**

(84) Benannte Vertragsstaaten :
**DE FR GB**

(56) Entgegenhaltungen :
**EP-A- 0 014 122**
**WO-A-86/07324**
**DE-B- 2 412 562**
**DE-C- 3 012 220**

(73) Patentinhaber : **ZAHNRADFABRIK**
**FRIEDRICHSHAFEN AKTIENGESELLSCHAFT**
**Löwentaler Strasse 100 Postfach 2520**
**W-7990 Friedrichshafen 1 (DE)**

(72) Erfinder : **EICKHOFF, Hans-Jürgen**
**Hofrat Moll Stra e 50**
**W-7992 Tettnang (DE)**
Erfinder : **TENBERGE, Peter**
**Riemenschneiderstrasse 43**
**W-8510 Fuerth (DE)**

(74) Vertreter : **Raue, Reimund**
**Zahnradfabrik Friedrichshafen AG Löwentaler**
**Strasse 100 Postfach 2520**
**W-7990 Friedrichshafen 1 (DE)**

EP 0 389 500 B1

## Beschreibung

Die Erfindung bezieht sich auf ein Überlagerungslenkgetriebe für Gleiskettenfahrzeuge, bei welchem die für die Kurvenfahrt erforderliche Lenkleistung über eine Nullwelle und Summierungsdifferentiale dem Fahrantrieb überlagert und die Nullwelle von einer Antriebswelle des Lenkgetriebes aus über ein hydrostatisch-mechanisches Verzweigungsgetriebe angetrieben wird, das in seinem mechanischen Leistungszweig ein Wendegetriebe und in seinem hydrostatischen Leistungszweig eine in ihrer Übersetzung stufenlos einstellbare hydrostatische Einheit aufweist, wobei beide Leistungszweige in einem Summierungsgetriebe zusammengeführt sind, so daß innerhalb eines mechanisch schaltbaren Radienbereiches durch Änderung des Schwenkwinkels der hydrostatischen Einheit ein bestimmter Lenkradius einstellbar ist.

Bei einem Überlagerungslenkgetriebe der vorgenannten Gattung (DE-C- 24 12 562) sind bei Verwendung einer hydrostatischmechanischen Leistungsverzweigung sowohl für Links- als auch Rechtskurven Lenkradien innerhalb jeweils zweier mechanisch schaltbarer Radienbereiche durch stufenlose Verstellung der hydrostatischen Einheit einstellbar. Dabei ist, ausgehend von der Geradeausfahrt des Kettenfahrzeuges, zunächst in beiden Lenkrichtungen ein erster Radienbereich vorgesehen, in dem die gesamte Lenkleistung über eine hydrostatische Einheit und ein nachgeschaltetes Untersetzungsgetriebe an die Nullwelle geleitet wird. An diesen ersten Radienbereich, der begrenzt ist durch den maximalen negativen und maximalen positiven Schwenkwinkel der hydrostatischen Einheit, schließt sich jeweils ein weiterer Radienbereich an, der bis zum kleinsten Lenkradius reicht und in welchem durch Schaltung zweier Planetengetriebe eine Summierung der über den hydrostatischen und über den mechanischen Teil fließenden Leistungen in unterschiedlichen Drehrichtungen erfolgt. Obwohl nur der geringere Teil der Lenkleistung über die mit schlechtem Wirkungsgrad arbeitende hydrostatische Einheit fließt, sind nach wie vor deren erforderliches Bauvolumen und Leistungsverluste zu hoch.

Der Erfindung liegt daher die Aufgabe zugrunde, die genannten Nachteile zu vermeiden und somit ein stufenloses, hydrostatisch-mechanisches Lenkgetriebe mit möglichst gutem Wirkungsgrad in einem am Gleiskettenfahrzeug vorhandenen Bauraum unterzubringen.

Diese Aufgabe wird dadurch gelöst, daß das Summierungsgetriebe zumindest zwei schaltbare Planetensätze aufweist, von denen jeweils ein Getriebeglied über das Wendegetriebe mit der Antriebswelle und jeweils ein Getriebeglied mit einer Hydrostatwelle der hydrostatischen Einheit verbunden sind, daß die übrigen Getriebeglieder zur Schaltung von zumindest zwei Radienbereichen je Lenkrichtung mittels Koppelwellen an die Nullwelle kuppelbar sind, wobei die jeweiligen Koppelwellen zur stufenlosen Umschaltung von einem Radienbereich zum nächsten bei positiver und negativer, maximaler Übersetzung der hydrostatischen Einheit gleiche Drehzahlen aufweisen. Durch die feinere Aufteilung des gesamten Lenkradius in einzelne Radienbereiche lassen sich einerseits die Leistungsverluste der hydrostatischen Einheit minimieren, wobei aufgrund des geringeren Leistungsflusses über die hydrostatische Einheit dieselbe auch ein kleineres Bauvolumen haben kann, und andererseits eine schnellere Änderung der Lenkradien möglich ist, da im mechanischen Teil des Verzweigungsgetriebes eine schnelle Umschaltung auf andere Lenkradien erfolgen kann.

Weitere vorteilhafte Ausgestaltungen der Erfindung sind in den Unteransprüchen 2 bis 9 beschrieben. Wenn das Summierungsgetriebe zwei schaltbare Planetensätze aufweist und zur Schaffung eines jeweils ersten Radienbereiches, ausgehend von der Geradeausfahrt des Kettenfahrzeuges, zwischen der Ausgangswelle und der Nullwelle ein Untersetzungsgetriebe parallel schaltbar ist, so sollen die beiden Koppelwellen bei maximaler Übersetzung der hydrostatischen Einheit im Schaltpunkt ihnen zugeordneter Schaltkupplungen gleiche Drehzahlen aufweisen, während bei Änderung der Übersetzung in Richtung eines entgegengesetzten Maximalwertes die zweite Koppelwelle für kleinere Lenkradien stufenlos schneller wird und die erste Koppelwelle für größere Lenkradien stufenlos langsamer wird bis zu einem Drehzahlwert, der sich aus der durch das Untersetzungsgetriebe reduzierten Drehzahl der Ausgangswelle ergibt. Dadurch läßt sich eine fortlaufend stufenlose Drehzahländerung der Nullwelle herbeiführen, obgleich jeweils innerhalb des Summierungsgetriebes von einem Planetensatz auf den anderen umgeschaltet wird. Durch die gleichzeitige Drehzahlreduzierung an einem Planetensatz bei einer Steigerung der Drehzahl an der Koppelwelle des anderen Planetensatzes können hohe Leerlaufverluste vermieden werden.

Ein einfacher und kompakter Aufbau des Untersetzungsgetriebes ergibt sich dadurch, daß dieses als Planetenradstufe ausgebildet ist, wobei sein Hohlrad unmittelbar auf der Nullwelle befestigt ist, während die über den Steg am Gehäuse abbremsbaren Planetenräder von der Ausgangswelle der hydrostatischen Einheit angetrieben werden. Die Einstellung des erforderlichen Lenkradius erfolgt in diesem Radienbereich, ausgehend von einer Nullstellung der hydrostatischen Einheit aus, in beiden Lenkrichtungen rein hydrostatisch.

Ein kompaktes Wendegetriebe wird dadurch geschaffen, daß in einer direkten Durchtriebsstufe eine zentrale Zwischenwelle dieses Wendegetriebes direkt an die Antriebswelle kuppelbar ist, während eine Drehrichtungsumkehr über zwei Planetengetriebe geschaltet wird, deren Sonnenräder drehfest mit der Zwischenwelle

2

verbunden sind, wobei eine Drehrichtungsumkehr der Zwischenwelle durch die Planetenräder des ersten Planetengetriebes und die über ihren Steg gehäusefest gekuppelten Planetenräder des zweiten Planetengetriebes erfolgt.

Eine alternative Ausbildung des Wendegetriebes, die geringe radiale Abmessungen voraussetzt, weist Doppelplanetenräder auf, von denen eines mit einem von der Antriebswelle angetriebenen äußeren Zentralrad kämmt und das andere mit einem drehfest auf einer Zwischenwelle, die zum Summierungsgetriebe führt, angeordneten inneren Zentralrad kämmt. Im direkten Durchtrieb des Wendegetriebes wird dabei die Stegwelle an die Antriebswelle gekuppelt, während in einer Reversierstufe die Stegwelle gehäusefest abbremsbar ist.

Wahlweise kann ein Wendegetriebe vorgesehen sein, das ebenfalls Doppelplanetenräder aufweist, deren Stegwelle von der Antriebswelle angetrieben wird, wobei ein Planetenrad des Doppelplanetensatzes über ein inneres Zentralrad mit der Zwischenwelle verbunden und das andere Planetenrad mit einem inneren Zentralrad kämmt, das wahlweise mit der Stegwelle kuppelbar (direkter Durchtrieb) oder gehäusefest abbremsbar ist (Reversierstufe).

Schließlich besteht noch die Möglichkeit, als Wendegetriebe ein Umlaufrädergetriebe vorzusehen, bei dem die Antriebswelle und die Zwischenwelle unmittelbar aneinander kuppelbar sind, während eine Reversierstufe mittels eines von der Antriebswelle angetriebenen und an die Zwischenwelle kuppelbaren, rückkehrenden Kegelradgetriebes erfolgt.

Wenn, wie weiterhin vorgeschlagen, im Summierungsgetriebe ein äußeres Zentralrad des der ersten Koppelwelle zugeordneten Planetensatzes und ein Steg des der zweiten Koppelwelle zugeordneten Planetensatzes mit der Hohlwelle gemeinsam trieblich verbunden sind und deren Sonnenräder auf der Ausgangswelle befestigt sind, so lassen sich auf diese Weise im Übergang eines Radienbereiches zum nächsten im Maximalwert der Übersetzung der hydrostatischen Einheit übereinstimmende Drehzahlen der beiden Koppelwellen, zwischen denen umgeschaltet werden soll, herbeiführen.

Schließlich läßt sich das Überlagerungslenkgetriebe in seinen axialen Abmessungen kompakt ausgestalten und es werden Antriebselemente eingespart, wenn das Untersetzungsgetriebe unmittelbar am Getriebeausgang der hydrostatischen Einheit angeordnet ist.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Zur weiteren Erläuterung der Erfindung wird auf die Zeichnung verwiesen, in der vier Ausführungsbeispiele vereinfacht dargestellt sind.

Es zeigen:

Fig. 1 eine schematische Darstellung eines erfindungsgemäßen Überlagerungslenkgetriebes eines Gleiskettenfahrzeuges,

Fig. 2 einen vergrößerten Ausschnitt II aus Fig. 1 im Bereich eines Summierungsgetriebes des Überlagerungslenkgetriebes,

Fig. 3 ein Diagramm, in welchem der Verlauf des Schwenkwinkels der hydrostatischen Einheit einzelnen Radienbereichen zugeordnet ist,

Fig. 4 eine Tabelle, aus der hervorgeht, welche Schaltelemente in den einzelnen Radienbereichen betätigt werden,

Fig. 5 eine alternative Ausbildung eines Wendegetriebes,

Fig. 6 eine alternative Ausbildung eines Wendegetriebes und

Fig. 7 eine alternative Ausbildung eines Wendegetriebes.

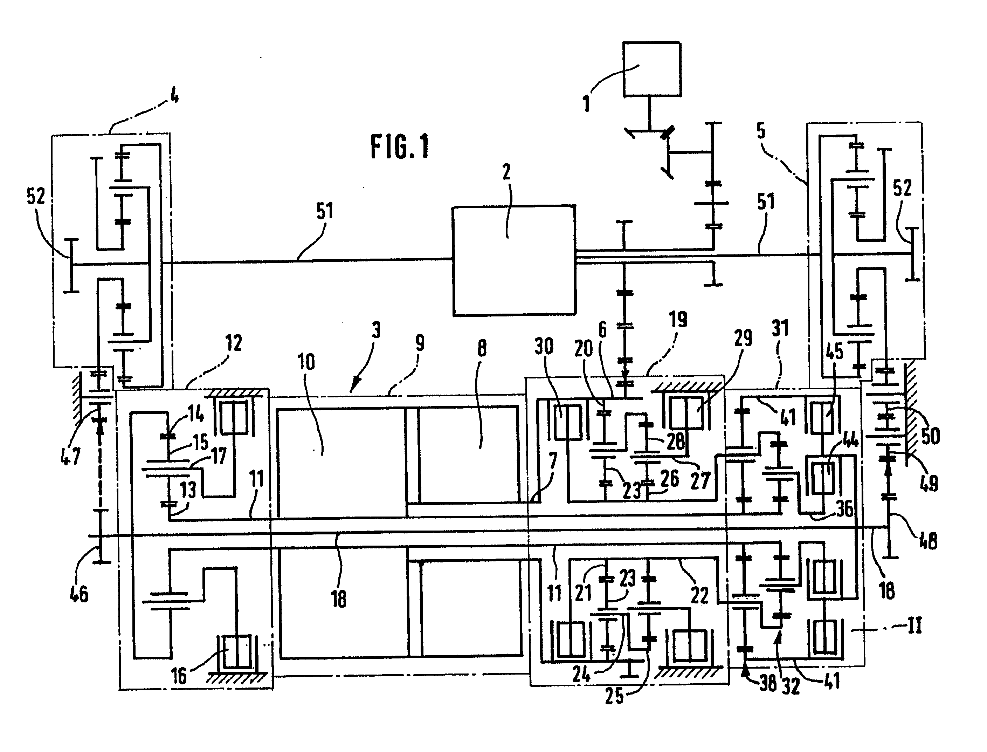

In Fig. 1 ist eine Antriebseinheit eines Gleiskettenfahrzeuges dargestellt, die aus einer Brennkraftmaschine 1, einem Schaltgetriebeteil 2, einem Überlagerungslenkgetriebe 3 sowie einem linken und einem rechten Summierungsdifferential 4 bzw. 5 besteht. Das Überlagerungslenkgetriebe 3 wird an einer Antriebswelle 6 mit einer Drehzahl angetrieben, die in einem festen Verhältnis zur Abtriebsdrehzahl der Brennkraftmaschine 1 steht.

Die Antriebswelle 6 ist einerseits über eine Pumpenwelle 7 mit einer Hydraulikpumpe 8 einer hydrostatischen Einheit 9 verbunden, wobei zu der hydrostatischen Einheit 9 weiterhin ein Hydraulikmotor 10 gehört. Vorzugsweise ist die Hydraulikpumpe 8 in ihrer Fördermenge regelbar, während der Hydraulikmotor 10 ein konstantes Schluckvolumen aufweist. Ausgangsseitig schließt sich an den Hydraulikmotor 10 eine Hydrostatwelle 11 an, die einerseits mit einem Untersetzungsgetriebe 12 in Verbindung steht. Dieses Untersetzungsgetriebe 12 ist als einfacher Planetensatz aufgebaut, dessen Sonnenrad 13 unmittelbar auf der Hydrostatwelle 11 befestigt ist, während die mit dem Sonnenrad 13 und einem Hohlrad 14 kämmenden Planetenräder 15 auf einem über eine Bremse 16 gehäusefest abbremsbaren Steg 17 gelagert sind. Das Hohlrad 14 des Untersetzungsgetriebes 12 ist seinerseits auf einer Nullwelle 18, die das Ausgangsglied des Überlagerungslenkgetriebes 3 bildet, befestigt.

An die Antriebswelle 6 ist andererseits ein Wendegetriebe 19 ankuppelbar, das Übersetzungen von +1 und -1 schaltet. Das Wendegetriebe 19 weist ein erstes Planetengetriebe auf, dessen äußeres Zentralrad 20 drehfest mit der Antriebswelle 6 verbunden ist, während dessen inneres Zentralrad 21 an einer Zwischenwelle 22 angreift. Sowohl mit dem inneren Zentralrad 21 als auch dem äußeren Zentralrad 20 befinden sich Planetenräder 23 im Eingriff, die auf einem Planetenradträger 24 gelagert sind, wobei dieser Planetenradträger 24 wiederum drehfest verbunden ist mit einem Hohlrad 25 eines zweiten Planetengetriebes des Wendegetriebes 19. Mit diesem Hohlrad 25 des zweiten Planetengetriebes und mit einem Sonnenrad 26, das ebenfalls drehfest mit der Zwischenwelle 22 verbunden ist, kämmen auf einem Steg 27 gelagerte Planetenräder 28. Der Steg 27 ist mittels einer Bremse 29 gehäusefest abbremsbar. Die Zwischenwelle 22 weist weiterhin eine Kupplung 30 auf, mittels welcher sie unmittelbar an die Antriebswelle 6 ankuppelbar ist.

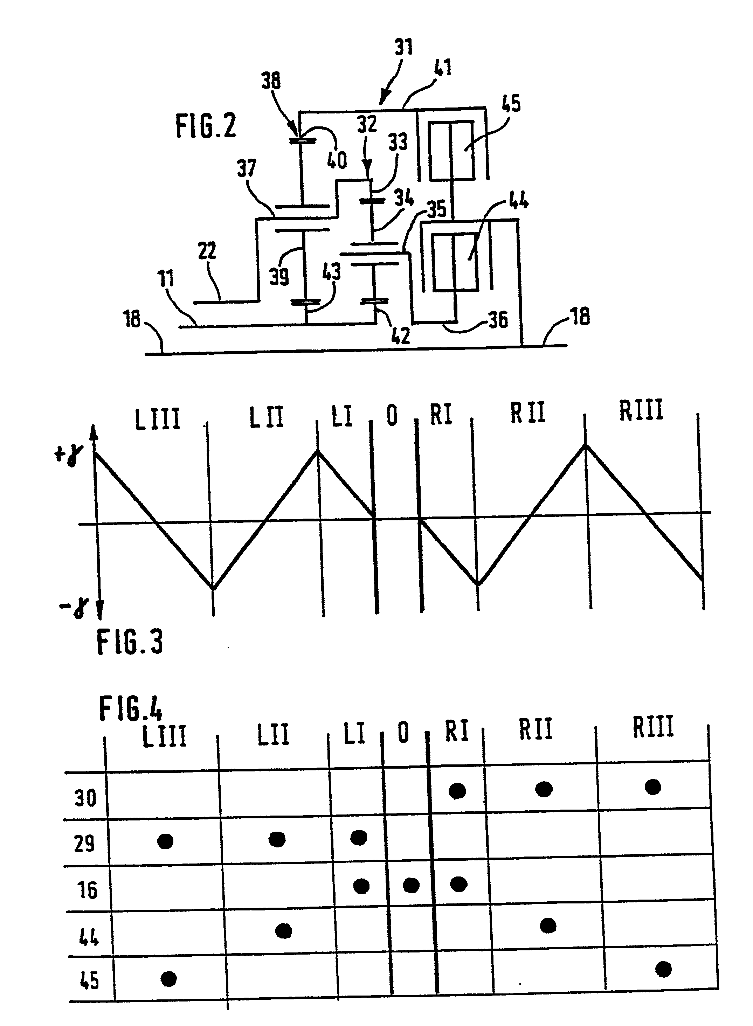

An das Wendegetriebe 19 schließt sich ein Summierungsgetriebe 31 an, dessen Aufbau anhand des vergrößerten Ausschnittes gemäß Fig. 2 erläutert wird. Danach ist ein erster Planetensatz 32 des Summierungsgetriebes 31 am äußeren Zentralrad 33 von der Zwischenwelle 22 angetrieben. Diesem äußeren Zentralrad 33 sind Planetenräder 34 zugeordnet, deren Steg 35 mit einer ersten Koppelwelle 36 in Verbindung steht.

Außerdem besteht eine triebliche Verbindung zwischen der Zwischenwelle 22 und einem Steg 37 eines zweiten Planetensatzes 32 des Summierungsgetriebes 31. Auf diesem Steg 37 sind wiederum Planetenräder 39 gelagert, die mit einem äußeren Zentralrad 40 kämmen, das mit einer zweiten Koppelwelle 41 verbunden ist. Sowohl das innere Zentralrad 42 des ersten Planetensatzes 32 als auch das innere Zentralrad 43 des zweiten Planetensatzes 38 sind drehfest mit der Hydrostatwelle 11 verbunden. Schließlich sind die erste Koppelwelle 36 über eine Kupplung 44 oder die zweite Koppelwelle 41 über eine Kupplung 45 an die Nullwelle 18 ankuppelbar.

Der Fig. 1 zufolge ist die Nullwelle 18 ist an ihrem einen Ende über ein Zahnrad 46 sowie ein Zwischenrad 47 mit dem Summierungsdifferential 4 verbunden. An ihrem anderen Ende steht die Nullwelle 18 über ein Zahnrad 48 und zwei Zwischenräder 49 und 50 mit dem Summierungsdifferential 5 in Verbindung. Die als Umlaufrädergetriebe ausgebildeten Summierungsgetriebe 4 und 5 werden außerdem vom Schaltgetriebeteil aus über Getriebeausgangswellen 51 angetrieben und stehen abtriebsseitig jeweils mit einem Kettenrad 52 des Gleiskettenfahrzeuges in Verbindung. Dadurch werden die Summierungsdifferentiale 4 und 5 bei einer Kurvenfahrt mit der unterschiedlich gerichteten Lenkleistung aus dem Überlagerungslenkgetriebe 3 überlagert.

In dem Diagramm der Fig. 3 sind dem Schwenkwinkel, also dem veränderten Förderstrom der Hydraulikpumpe 8, die erzielbaren Radienbereiche für Rechtslenkung RI bis RIII und für Linkslenkung LI bis LIII zugeordnet. Dabei besteht ein unmittelbarer Zusammenhang mit der Tabelle nach Fig. 4. In der Tabelle sind die bei jedem Wechsel des Radienbereiches zu betätigenden Schaltelemente des Wendegetriebes 19, des Untersetzungsgetriebes 12 und des Summierungsgetriebes 31 aufgeführt. Durch Punkte ist jeweils markiert, welche Schaltelemente in dem jeweiligen Radienbereich betätigt sind.

Anhand des Diagrammes nach Fig. 3, der Tabelle nach Fig. 4 und der schematischen Darstellung der Antriebseinheit nach Fig. 1 soll nachfolgend die Funktionsweise des Überlagerungslenkgetriebes erläutert werden:

Bei Geradeausfahrt des Gleiskettenfahrzeuges befindet sich die hydrostatische Einheit 9 in einer Stellung, in der keine Leistung von der Antriebswelle 6 aus auf die Nullwelle übertragen wird, d. h. der Verstellwinkel $\gamma$ der Hydraulikpumpe 8 beträgt 0°. Da weder im Wendegetriebe noch im Summierungsgetriebe Schaltelememte betätigt sind, wird über diesen Leistungszweig ebenfalls keine Leistung auf die Nullwelle 18 übertragen. Die Bremse 16 des Untersetzungsgetriebes 12 ist für eine Lenkung aus der Nullstellung heraus geschlossen.

Wird nun durch Verstellung des nicht dargestellten Lenkorgans des Gleiskettenfahrzeuges das Überlagerungslenkgetriebe 3 im Sinne einer Rechtskurve angesteuert, so ändert sich der Förderstrom der Hydraulikpumpe durch Veränderung ihres Schwenkwinkels $\gamma$ bis in einen maximalen negativen Wert $-\gamma_{max}$. Das führt dazu, daß sich die Drehzahl der Nullwelle 18 proportional zur Änderung des Schwenkwinkels bis auf einen negativen Wert verändert, der bestimmt ist durch die Ausgangsdrehzahl der hydrostatischen Einheit 9 und das Übersetzungsverhältnis des Untersetzungsgetriebes 12. Während dieser Phase wird bereits die Kupplung 30 des Wendegetriebes 19 betätigt. Das Untersetzungsgetriebe 12 begrenzt im Radienbereich RI bei maximalem Schwenkwinkel der hydrostatischen Einheit 9 in negativer Richtung die Drehzahl der Nullwelle 18 auf einen maximalen Wert, der der Drehzahl der leistungsverzweigt über die Hydrostatwelle 11 sowie die Zwischenwelle 22 und den ersten Planetensatz 32 angetriebenen ersten Koppelwelle 36 entspricht. Es ergibt sich somit ein stufenloser Übergang vom Radienbereich RI auf den Radienbereich RII dadurch, daß die erste Koppelwelle 36 über die Kupplung 44 an die Nullwelle 18 angekuppelt wird, wonach die Bremse 16 des Untersetzungsgetriebes 12 gelöst wird.

In diesem zweiten Radienbereich für Rechtslenkung RII entspricht die Drehzahl der Zwischenwelle 22 der Drehzahl der Antriebswelle 6, da das Wendegetriebe durch Betätigung der Kupplung 30 direkt durchgeschaltet ist. Die Lenkleistung fließt leistungsverzweigt über die hydrostatische Einheit 9 und die Hydrostatwelle 11 zum ersten Planetensatz 32 des Summierungsgetriebes 31, während der mechanische Anteil der Lenkleistung über

4

das Wendegetriebe 19 und die Zwischenwelle 22 zum ersten Planetensatz 32 fließt. Innerhalb dieses Radienbereiches RII wird die hydrostatische Einheit 9 wiederum verstellt auf ihren maximalen positiven Schwenkwin- kel $+\gamma_{max}$. An der zweiten Koppelwelle 41 des zweiten Planetensatzes 38 stellt sich durch den leistungsverzweigten Antrieb des Steges 37 von der Zwischenwelle 22 und des inneren Zentralrades 43 von der Hydrostatwelle 11 bei maximalem positiven Schwenkwinkel $+\gamma_{max}$ eine Drehzahl ein, die der momentanen Drehzahl der Nullwelle 18 entspricht.

In diesem Zustand, also bei maximalem positiven Schwenkwinkel der hydrostatischen Einheit 9 wird die Kupplung 45 betätigt, so daß die zweite Koppelwelle 41 an die Nullwelle 18 angekuppelt ist. Anschließend wird die Kupplung 44 der ersten Koppelwelle geöffnet. In diesem dritten Radienbereich, der die kleinsten Kurvenradien beinhaltet, wird die hydrostatische Einheit 9 wiederum verstellt bis zu einem maximalen negativen Schwenkwinkel, wobei sich schließlich in diesem Maximalwert $-\gamma_{max}$ des geschalteten Radienbereiches RIII die absolut größte Drehzahl der Nullwelle 18 ergibt, so daß sich aufgrund der großen Überlagerungsdrehzahl unterschiedlicher Drehrichtungen an den Summierungsdifferentialen 4 und 5 ein kleinster Lenkradius bei Rechtslenkung ergibt.

Bei einer Linkskurve des Gleiskettenfahrzeuges wirken die hydrostatische Einheit 9 und das Summierungsgetriebe 31 prinzipiell in gleicher Weise zusammen, nur daß in den vergleichbaren Radienbereichen LI bis LIII die Verstellung des Schwenkwinkels der hydrostatischen Einheit in umgekehrter Richtung erfolgt. In diesen Radienbereichen LI, LII und LIII ist weiterhin, im Gegensatz zur Rechtslenkung, im Wendegetriebe die Bremse 29 anstelle der Kupplung 30 betätigt. Damit erfolgt im Wendegetriebe 19 eine Drehrichtungsumkehr an dem auf die Zwischenwelle 22 übertragenen mechanischen Leistungsanteil. Der Fig. 2 kann entnommen werden, daß mit dem erfindungsgemäß ausgebildeten Überlagerungslenkgetriebe 3 sowohl der gesamte rechte als auch der linke Kurvenradius eines Gleiskettenfahrzeuges in drei Abschnitte unterteilt werden kann. Der mechanische Teil (Summierungsgetriebe 31, Untersetzungsgetriebe 12 und Wendegetriebe 19) ist so gewählt, daß der hydrostatische Anteil der Leistungsverzweigung in jedem Abschnitt gleich groß ist und dadurch die hydrostatische Getriebeeinheit bezüglich ihres Wirkungsgrades optimal ausgenutzt werden kann. Grundsätzlich kann jeder Gesamtradienbereich durch Erweiterung des Summierungsgetriebes 31 auch in mehr als drei Abschnitte aufgeteilt werden, wenn dies zweckmäßig erscheint.

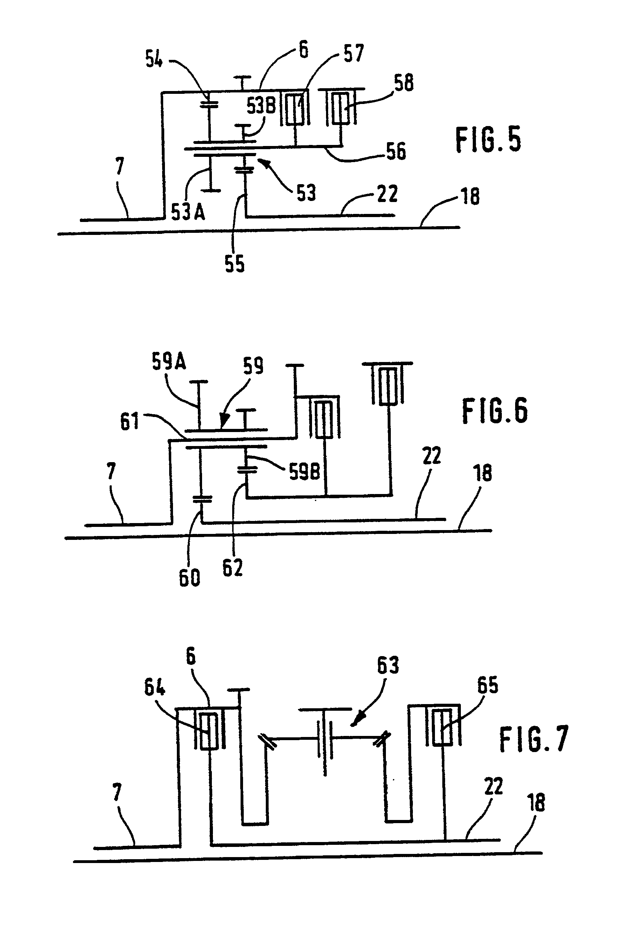

In den Fig. 5 bis 7 sind drei weitere Bauvarianten des Wendegetriebes 19 dargestellt. Nach der Fig. 5 weist das Wendegetriebe 19 Doppelplanetenräder 53 auf, von denen ein Planetenrad 53A mit einem äußeren Zentralrad 54 in Eingriff ist, welches von der Antriebswelle 6 angetrieben wird. Das andere Planetenrad 53B steht in Eingriff mit einem inneren Zentralrad 55, das auf der Zwischenwelle 22 angeordnet ist. Eine Stegwelle 56, die sich an ein die Doppelplanetenräder 53 lagerndes Element anschließt, kann für einen direkten Durchtrieb mittels einer Kupplung 57 mit der Antriebswelle 6 verbunden oder zur Schaltung einer Reversierstufe mittels einer Bremse 58 gehäusefest abgebremst werden.

Bei dem Ausgestaltungsbeispiel des Wendegetriebes 19 nach Fig. 6 sind mit 59 bezeichnete Doppelplanetenräder vorgesehen, deren Planetenrad 59A mit einem auf der Zwischenwelle 22 drehfest angeordneten inneren Zentralrad 60 kämmt. Das weitere Planetenrad 59B kämmt mit einem inneren Zentralrad 62. Der Antrieb des Wendegetriebes 19 von der Antriebswelle 6 erfolgt über eine Stegwelle 61, wobei zur Schaltung eines direkten Durchtriebes das innere Zentralrad 62 an die Stegwelle 61 kuppelbar und für eine Reversierstufe dieses innere Zentralrad 62 gehäusefest abbremsbar ist.

Schließlich ist bei dem Ausgestaltungsbeispiel nach der Fig. 7 die Antriebswelle 6 über eine Kupplung 64 unmittelbar an die Zwischenwelle 22 kuppelbar. Zur Schaltung einer Reversierstufe steht ein rückkehrendes Kegelradgetriebe 63 zur Verfügung, das von der Antriebswelle 6 angetrieben wird und über eine weitere Kupplung 65 an die Zwischenwelle 22 ankuppelbar ist.

Bezugszeichen

| | |
|---|---|
| 1 | Brennkraftmaschine |
| 2 | Schaltgetriebeteil |
| 3 | Überlagerungslenkgetriebe |
| 4 | Summierungsdifferential |
| 5 | Summierungsdifferential |
| 6 | Antriebswelle |
| 7 | Pumpenwelle |
| 8 | Hydraulikpumpe |
| 9 | hydrostatische Einheit |
| 10 | Hydraulikmotor |
| 11 | Hydrostatwelle |

| | |
|---|---|
| 12 | Untersetzungsgetriebe |
| 13 | Sonnenrad |
| 14 | Hohlrad |
| 15 | Planetenräder |
| 16 | Bremse |
| 17 | Steg |
| 18 | Nullwelle |
| 19 | Wendegetriebe |
| 20 | äußeres Zentralrad |
| 21 | inneres Zentralrad |
| 22 | Zwischenwelle |
| 23 | Planetenräder |
| 24 | Planetenradträger |
| 25 | Hohlrad |
| 26 | Sonnenrad |
| 27 | Steg |
| 28 | Planetenräder |
| 29 | Bremse |
| 30 | Kupplung |
| 31 | Summierungsgetriebe |
| 32 | erster Planetensatz von 31 |
| 33 | äußeres Zentralrad von 32 |
| 34 | Planetenräder von 32 |
| 35 | Steg von 32 |
| 36 | erste Koppelwelle |
| 37 | Steg von 38 |
| 38 | zweiter Planetensatz von 31 |
| 39 | Planetenräder von 38 |
| 40 | äußeres Zentralrad von 38 |
| 41 | zweite Koppelwelle |
| 42 | inneres Zentralrad von 32 |
| 43 | inneres Zentralrad von 38 |
| 44 | Kupplung |
| 45 | Kupplung |
| 46 | Zahnrad |
| 47 | Zwischenrad |
| 48 | Zahnrad |
| 49 | Zwischenrad |
| 50 | Zwischenrad |
| 51 | Getriebeausgangswellen |
| 52 | Kettenrad |
| 53 | Doppelplanetenräder |
| 53A | Planetenräder von 53 |
| 53B | Planetenräder von 53 |
| 54 | äußeres Zentralrad |
| 55 | inneres Zentralrad |
| 56 | Stegwelle |
| 57 | Kupplung zwischen 6 und 56 |
| 58 | Bremse |
| 59 | Doppelplanetenräder |
| 59A | Planetenräder von 59 |
| 59B | Planetenräder von 59 |
| 60 | inneres Zentralrad auf 22 |
| 61 | Stegwelle |
| 62 | inneres Zentralrad |
| 63 | rückkehrendes Kegelradgetriebe |
| 64 | Kupplung zwischen 6 und 22 |
| 65 | Kupplung zwischen 63 und 22 |

**Patentansprüche**

1. Überlagerungslenkgetriebe (3) für Gleiskettenfahrzeuge, bei welchem die für die Kurvenfahrt erforderliche Lenkleistung über eine Nullwelle (18) und Summierungsdifferentiale (4, 5) dem Fahrantrieb überlagert und die Nullwelle (18) von einer Antriebswelle (6) des Lenkgetriebes aus über ein hydrostatisch-mechanisches Verzweigungsgetriebe angetrieben wird, das in seinem mechanischen Leistungszweig ein Wendegetriebe (19) und in seinem hydrostatischen Leistungszweig eine in ihrer Übersetzung stufenlos einstellbare hydrostatische Einheit (9) aufweist, wobei beide Leistungszweige in einem Summierungsgetriebe (31) zusammengeführt sind, so daß innerhalb eines mechanisch schaltbaren Radienbereiches durch Änderung des Schwenkwinkels der hydrostatischen Einheit (9) ein bestimmter Lenkradius einstellbar ist, dadurch **gekennzeichnet**, daß das Summierungsgetriebe (31) zumindest zwei schaltbare Planetensätze (32, 38) aufweist, von denen jeweils ein Getriebeglied (33 und 37) über das Wendegetriebe (19) mit der Antriebswelle (6) und jeweils ein Getriebeglied (42 und 43) mit einer Hydrostatwelle (11) der hydrostatischen Einheit (9) verbunden sind, daß die übrigen Getriebeglieder (35 und 40) zur Schaltung von zumindest zwei Radienbereichen je Lenkrichtung mittels Koppelwellen (36, 41) an die Nullwelle (18) kuppelbar sind, wobei die jeweiligen Koppelwellen (36, 41) zur stufenlosen Umschaltung von einem Radienbereich zum nächsten (LII-LIII bzw. RII-RIII) bei maximaler Übersetzung $+\gamma_{max}$ bzw. $-\gamma_{max}$ der hydrostatischen Einheit (9) gleiche Drehzahlen aufweisen.

2. Überlagerungslenkgetriebe mit einem zwei schaltbare Planetensätze (32, 38) aufweisenden Summierungsgetriebe (31), dem zwischen Hydrostatwelle (11) und Nullwelle (18) ein Untersetzungsgetriebe (12) parallelgeschaltet ist, nach Anspruch 1, dadurch **gekennzeichnet**, daß die beiden Koppelwellen (36, 41) bei maximaler Übersetzung ($+\gamma_{max}$ bzw. $-\gamma_{max}$) der hydrostatischen Einheit (9) und im Schaltpunkt ihnen zugeordneter Schaltkupplungen (44, 45) gleiche Drehzahlen aufweisen, während bei Änderung der Übersetzung der hydrostatischen Einheit (9) in Richtung eines jeweils entgegengesetzten Maximalwertes die zweite Koppelwelle (41) für kleinere Lenkradien stufenlos schneller wird und die erste Koppelwelle (36) für größere Lenkradien stufenlos langsamer wird bis zu einem Drehzahlwert, der sich aus der durch das Untersetzungsgetriebe (12) reduzierten Drehzahl der Hydrostatwelle (11) ergibt.

3. Überlagerungslenkgetriebe für Gleiskettenfahrzeuge, bei welchem das Untersetzungsgetriebe (12) als Planetenradstufe ausgebildet ist, deren Sonnenrad (13) mit der Hydrostatwelle (11) verbunden ist, nach einem der vorhergehenden Ansprüche, dadurch **gekennzeichnet**, daß ein Hohlrad (14) der Planetenstufe mit der Nullwelle (18) verbunden und ein Steg (17) der Planetenradstufe mittels einer ersten Bremse (16) gehäusefest abbremsbar ist.

4. Überlagerungslenkgetriebe für Gleiskettenfahrzeuge, bei dem das Wendegetriebe (19) zwei Planetengetriebe aufweist, nach einem der vorhergehenden Ansprüche, dadurch **gekennzeichnet**, daß in einer direkten Durchtriebsstufe des Wendegetriebes (19) eine Zwischenwelle (22) mittels einer Kupplung (30) an die Antriebswelle (6) kuppelbar ist, daß Sonnenräder (21, 26) beider Planetengetriebe drehfest mit der Zwischenwelle (22) verbunden sind, wobei die Antriebswelle (6) am äußeren Zentralrad (20) des ersten Planetengetriebes angreift, dessen Planetenradträger (24) mit einem Hohlrad (25) des zweiten Planetengetriebes verbunden ist, während zur Schaltung einer Reversierstufe ein Steg (25) des zweiten Planetengetriebes gehäusefest abbremsbar ist, wobei mittels des Wendegetriebes (19) Übersetzungen von +1 und -1 zwischen der Antriebswelle (6) und der Zwischenwelle (22) schaltbar sind.

5. Überlagerungslenkgetriebe für Gleiskettenfahrzeuge mit einem als Planetengetriebe ausgebildeten Wendegetriebe (19), nach einem der Ansprüche 1 bis 3, dadurch **gekennzeichnet**, daß Doppelplanetenräder (53) des Planetengetriebes (19) jeweils mit einem mit der , Antriebswelle (6) verbundenen äußeren Zentralrad (54) und mit einem drehfest auf einer Zwischenwelle (22) angeordneten inneren Zentralrad (55) kämmen und daß eine Stegwelle (56) im direkten Durchtrieb des Wendegetriebes (19) mittels einer Kupplung (57) an die Antriebswelle (6) kuppelbar und in einer Reversierstufe mittels einer Bremse (58) gehäusefest abbremsbar ist.

6. Überlagerungslenkgetriebe für Gleiskettenfahrzeuge mit einem als Planetengetriebe ausgebildeten Wendegetriebe (19), nach einem der Ansprüche 1 bis 3, dadurch **gekennzeichnet**, daß Doppelplanetenräder (59), deren Stegwelle (61) von der Antriebswelle (6) aus angetrieben wird, jeweils mit einem auf einer zum Summierungsgetriebe führenden Zwischenwelle (22) angeordneten inneren Zentralrad (60) und einem wahlweise mit der Stegwelle (61) kuppelbaren oder gehäusefest abbremsbaren inneren Zentralrad (62) in Eingriff sind.

7. Überlagerungslenkgetriebe für Gleiskettenfahrzeuge mit einem als Umlaufrädergetriebe ausgebildeten Wendegetriebe (19), nach einem der Ansprüche 1 bis 3, dadurch **gekennzeichnet**, daß eine zum Summierungsgetriebe (31) führende Zwischenwelle (22) im Wendegetriebe (19) an die Antriebswelle (6) ankuppelbar ist und daß zur Schaltung einer Reversierstufe zwischen die Antriebswelle (6) und die Zwischenwelle (22) ein rückkehrendes Kegelradgetriebe (63) schaltbar ist.

8. Überlagerungslenkgetriebe für Gleiskettenfahrzeuge, nach einem der vorhergehenden Ansprüche, dadurch **gekennzeichnet**, daß im Summierungsgetriebe (31) ein äußeres Zentralrad (33) des der ersten Koppelwelle (36) zugeordneten Planetensatzes (32) und ein Steg (37) des der zweiten Koppelwelle (41) zugeordneten Planetensatzes (38) mit der Zwischenwelle (22) gemeinsam trieblich verbunden sind und deren innere Zentralräder (42, 43) auf der Hydrostatwelle (11) befestigt sind.

9. Überlagerungslenkgetriebe für Gleiskettenfahrzeuge nach einem der vorhergehenden Ansprüche, dadurch **gekennzeichnet**, daß das Untersetzungsgetriebe (12) unmittelbar am Getriebeausgang der hydrostatischen Einheit (9) angeordnet ist.

## Claims

1. Superposition steering gear (3) for track-laying vehicles, in which the steering power necessary for travelling round bends is superimposed on the travel drive via a zero shaft (18) and accumulation differentials (4, 5), and the zero shaft (18) is driven from a drive shaft (6) of the steering gear via a hydrostatic-mechanical branching mechanism, which has in its mechanical power branch a reverse gear (19) and in its hydrostatic power branch a hydrostatic unit (9) with infinitely variable translation ratio, both power branches converging in an accumulation gear (31), so that within a mechanically controllable radius range, a specified steering radius can be set by varying the pivotal angle of the hydrostatic unit (9), characterised in that the accumulation gear (31) has at least two switchable planet gear sets (32, 38), of which one gear member (33 and 37) in each case is connected to the drive shaft (6) via the reverse gear (19) and one gear member (42 and 43) in each case is connected to a hydrostatic shaft (11) of the hydrostatic unit (9), in that the remaining gear members (35 and 40) can be coupled to the zero shaft (18) by means of coupling shafts (36, 41) in order to control at least two radius ranges per steering direction, the respective coupling shafts (36, 41) having the same speeds at the maximum translation ratio of $+\gamma_{max}$ respectively $-\gamma_{max}$ of the hydrostatic unit (9) for gradual changing from one radius range to the next (LII-LIII and RII-RIII respectively).

2. Superposition steering gear with an accumulation gear (31) having two switchable planet gear sets (32, 38), a reduction gear (12) being connected in parallel to said accumulation gear between the hydrostatic shaft (11) and the zero shaft (18), according to claim 1, characterised in that the two coupling shafts (36, 41) have the same speeds at the maximum translation ratio ($+\gamma_{max}$ respectively $-\gamma_{max}$) of the hydrostatic unit (9) and in the shifting point of shift clutches (44, 45) associated with them, whereas if the translation ratio of the hydrostatic unit (9) is changed in the direction of a respectively opposite maximum value, the second coupling shaft (41) becomes gradually faster for smaller steering radii and the first coupling shaft (36) becomes gradually slower for larger steering radii, until a speed is reached which is produced by the speed of the hydrostatic shaft (11) reduced by the reduction gear (12).

3. Superposition steering gear for track-laying vehicles, in which the reduction gear (12) is formed as a planet wheel stage, whose sun wheel (13) is connected to the hydrostatic shaft (11), according to one of the preceding claims, characterised in that a ring gear (14) of the planet gear stage is connected to the zero shaft (18) and a web (17) of the planet wheel stage is brakable rigidly with the housing by means of a first brake (16).

4. Superposition steering gear for track-laying vehicles, in which the reverse gear (19) has two planetary gears, according to one of the preceding claims, characterised in that, in a direct drive-through stage of the reverse gear (19), a jack shaft (22) can be coupled to the drive shaft (6) by means of a clutch (30), in that sun wheels (21, 26) of the two planetary gears are connected non-rotatably to the jack shaft (22), in which case the drive shaft (6) engages on the outer central wheel (20) of the first planetary gear, whose planet wheel carrier (24) is connected to a ring gear (25) of the second planetary gear, whereas in order to engage a reversing stage, a web (25) of the second planetary gear is brakable rigidly with the housing, in which case translation ratios of +1 and -1 can be set between the drive shaft (6) and the jack shaft (22) by means of the reverse gear (19).

5. Superposition steering gear for track-laying vehicles with a reverse gear (19) formed as a planetary gear, according to one of claims 1 to 3, characterised in that double planet wheels (53) of the planetary gear (19) each mesh with an outer central wheel (54) connected to the drive shaft (6) and with an inner central wheel (55) mounted non-rotatably on a jack shaft (22) and in that a web shaft (56) can be coupled to the drive shaft (6) in the direct drive-through of the reverse gear (19) by means of a clutch (57) and is brakable rigidly with the housing in a reversing stage by means of a brake (58).

6. Superposition steering gear for track-laying vehicles with a reverse gear (19) formed as a planet gear, according to one of claims 1 to 3, characterised in that double planet wheels (59), whose web shaft (61) is driven from the drive shaft (6) are each engaged with an inner central wheel (60) mounted on a jack shaft (22) leading to the accumulation gear and to an inner central wheel (62) which can optionally be coupled to the web shaft (61) or is brakable rigidly with the housing.

7. Superposition steering gear for track-laying vehicles with a reverse gear (19) formed as an epicyclic train, according to one of claims 1 to 3, characterised in that a jack shaft (22) leading to the accumulation gear (31) in the reverse gear (19) is engageable with the drive shaft (6) and in that a reversing conical gear (63) is shiftable between the drive shaft (6) and the jack shaft (22) in order to engage a reversing stage.

8. Superposition steering gear for track-laying vehicles according to one of the preceding claims, characterised in that in the accumulation gear (31) an outer central wheel (33) of the planet gear set (32) associated with the first coupling shaft (36) and a web (37) of the planet gear set (38) associated with the second coupling shaft (41) are connected to the jack shaft (22) so as to be drivable together and their inner central wheels (42, 43) are fixed to the hydrostatic shaft (11).

9. Superposition steering gear for track-laying vehicles according to one of the preceding claims, characterised in that the reduction gear (12) is directly mounted on the transmission output of the hydrostatic unit (9).

## Revendications

1. Transmission différentielle de direction (3) pour véhicules à chenilles, dans laquelle la puissance de braquage nécessaire pour la marche en courbe est superposée à la propulsion, par l'intermédiaire d'un arbre neutre (18) et de différentiels sommateurs (4, 5), et l'arbre neutre (18) est entraîné à partir d'un arbre d'entrée (6) au moyen d'une transmission à dérivation hydrostatique-mécanique qui comporte une boîte de virage (19) dans sa branche de transmission mécanique et une unité hydrostatique (9) à rapport réglable en continu dans sa branche de transmission hydrostatique, les deux branches de transmission aboutissant à une boîte de sommation (31), de sorte qu'à l'intérieur d'un domaine de rayons pouvant être enclenché mécaniquement, un rayon de virage déterminé est réglable par variation de l'angle de réglage de l'unité hydrostatique (9) **caractérisée en ce que** la boîte de sommation (31) comporte au moins deux trains planétaires commutables (32, 38), dans chacun desquels un élément d'engrenage (33 et 37) est raccordé à l'arbre d'entrée (6) au moyen de la boîte de virage (19) et un élément d'engrenage (42 et 4 3) est raccordé à un arbre hydrostatique (11) de sortie de l'unité hydrostatique (9), en ce que les autres éléments d'engrenage (35 et 40) sont agencés pour être couplés à l'arbre neutre (18) au moyen d'arbres de couplage (36, 41) pour commander au moins deux domaines de rayons dans chaque sens de virage, et en ce que, pour assurer un passage continu d'un domaine de rayons à un domaine adjacent (LII-LIII bzw. RII-RIII), les différents arbres de couplage (36, 41) présentent des vitesses de rotation égales pour le rapport de transmission maximal ($+\gamma_{max}$ ou $-\gamma_{max}$) de l'unité hydrostatique (9).

2. Transmission différentielle de direction pourvue d'une boîte de sommation (31) comportant deux trains planétaires enclenchables (32, 38) et montée en parallèle avec une boîte de réduction (12) entre l'arbre hydrostatique (11) et l'arbre neutre (18), selon la revendication 1, **caractérisée en ce que** les deux arbres de couplage (36, 41) présentent des vitesses de rotation égales pour le rapport de transmission maximal ($+\gamma_{max}$ ou $-\gamma_{max}$) de l'unité hydrostatique (9) et au point d'enclenchement des embrayages de commande (44, 45) qui leur correspondent, tandis qu'en cas de variation du rapport de transmission de l'unité hydrostatique (9) en direction d'une valeur maximale de sens opposé, la vitesse du second arbre de couplage (41) augmente en continu pour de petits rayons de virage et la vitesse du premier arbre de couplage (36) diminue en continu pour de grands rayons de virage, jusqu'à une valeur de vitesse qui résulte de la vitesse de l'arbre hydrostatique (11) qui est réduite par la boîte de réduction (12).

3. Transmission différentielle de direction pour véhicules à chenilles, dans laquelle la boîte de réduction (12) est formée par un train planétaire dont le pignon planétaire (13) est raccordé à l'arbre hydrostatique (11), selon l'une des revendications précédentes, **caractérisée en ce qu'**une roue à denture intérieure (14) dudit train planétaire est raccordée à l'arbre neutre (18) et un porte-satellites (17) du train planétaire est agencé pour être freiné par rapport au boîtier au moyen d'un premier frein (16).

4. Transmission différentielle de direction pour véhicules à chenilles, dans laquelle la boîte de virage (19) comporte deux engrenages planétaires, selon l'une des revendications précédentes, **caractérisée en ce que,** dans un étage d'entraînement direct de la boîte de virage (19), un arbre intermédiaire (22) est agencé pour être couplé à l'arbre d'entrée (6) au moyen d'un embrayage (30), en ce que les pignons planétaires (21, 26) des deux engrenages planétaires sont solidaires en rotation de l'arbre intermédiaire (22), l'arbre d'entrée (6) attaquant une roue planétaire extérieure (20) du premier engrenage planétaire dont le porte-satellites (24) est solidaire d'une roue à denture intérieure (25) du second engrenage planétaire, tandis que pour l'enclenchement d'un étage inverseur, un porte-satellites (27) du second engrenage planétaire est agencé pour être freiné par rapport au boîtier, de sorte que la boîte de virage (19) peut être commandée pour assurer des rapports de transmission de +1 et -1 entre l'arbre d'entrée (6) et l'arbre intermédiaire (22).

5. Transmission différentielle de direction pour véhicules à chenilles, comportant une boîte de virage (19) formée par un engrenage planétaire, selon l'une des revendications 1 à 3, **caractérisée en ce que** des pignons satellites doubles (53) de l'engrenage planétaire (19) s'engrènent respectivement sur une roue planétaire extérieure (54) solidaire de l'arbre d'entrée (6) et sur une roue planétaire intérieure (55) solidaire en rotation d'un arbre intermédiaire (22), et en ce qu'un arbre porte-satellites (56) est agencé pour être couplé à l'arbre d'entrée (6) au moyen d'un embrayage (57) dans le mode de transmission direct de la boîte de virage (19), et pour être freiné par rapport au boîtier au moyen d'un frein (58) dans un mode de transmission inverse.

6. Transmission différentielle de direction pour véhicules à chenilles, comportant une boîte de virage (19) formée par un engrenage planétaire, selon l'une des revendications 1 à 3, **caractérisée en ce que** des pignons planétaires doubles (59), dont l'arbre porte-satellites (61) est entraîné par l'arbre d'entrée (6), sont engrenés respectivement sur une roue planétaire intérieure (60) montée sur un arbre intermédiaire (22) conduisant à une boîte de sommation et sur une roue planétaire intérieure (62) agencée pour être sélectivement couplée à l'arbre porte-satellites (61) ou freinée par rapport au boîtier.

7. Transmission différentielle de direction pour véhicules à chenilles, comportant une boîte de virage (19) formée par un engrenage à pignons satellites, selon l'une des revendications 1 à 3, **caractérisée en ce qu'un** arbre intermédiaire (22) conduisant à la boîte de sommation (31) est agencé pour être couplé à l'arbre d'entrée (6) dans la boîte de virage (19) et en ce que, pour enclencher un mode de transmission inverse, un engrenage inverseur à pignons coniques (63) est agencé pour être couplé entre l'arbre d'entrée (6) et l'arbre intermédiaire (22).

8. Transmission différentielle de direction pour véhicules à chenilles, selon l'une des revendications précédentes, **caractérisée en ce que**, dans la boîte de sommation (31), une roue planétaire extérieure (33) du train planétaire (32) correspondant au premier arbre de couplage (36) et un porte-satellites (37) du train planétaire (38) correspondant au second arbre de couplage (41) sont tous deux en liaison motrice avec l'arbre intermédiaire (22), et en ce que les roues planétaires intérieures (42, 43) des deux trains sont fixées sur l'arbre hydrostatique (11).

9. Transmission différentielle de direction pour véhicules à chenilles, selon l'une des revendications précédentes, **caractérisée en ce que** la boîte de réduction (12) est disposée directement sur la sortie de l'unité hydrostatique (9).

FIG.1

FIG.2

FIG.3

FIG.4

| | LIII | | LII | | LI | 0 | RI | | RII | | RIII |
|---|---|---|---|---|---|---|---|---|---|---|---|---|
| 30 | | | | | | | | ● | | ● | | ● |
| 29 | ● | | ● | | ● | | | | | | | |
| 16 | | | | | ● | | ● | ● | | | | |
| 44 | | | ● | | | | | | | ● | | |
| 45 | ● | | | | | | | | | | | ● |

FIG.5

FIG.6

FIG.7